# EUROPÄISCHE PATENTANMELDUNG

(11) **EP 2 527 171 A1**
(43) Veröffentlichungstag der Anmeldung: **28.11.2012**
(21) Anmeldenummer: 12178338.5
(22) Anmeldetag: 18.11.2008
(51) Int. Cl.: B60G 17/04, B60G 11/30, B60G 15/12, F16F 9/096

(54) **Dämpfungssystem für Fahrzeuge**

(62) Teilanmeldung aus: 08169350.9
(71) Anmelder: Hemscheidt Fahrwerktechnik GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(57) **Zusammenfassung**

Die vorliegende Erfindung betrifft ein Dämpfungssystem für Fahrzeuge mit mindestens zwei Dämpfereinheiten (2) zum Dämpfen von Rad-Federungsbewegungen, wobei jede Dämpfereinheit (2) ein hydraulisches, als separates Bauteil ausgebildetes Dämpfungsventil (4) zum Drosseln von Strömungen eines hydraulischen Dämpfungsmediums (DM) aufweist, und wobei mindestens zwei Dämpfungsventile (4) hydraulisch mit einem gemeinsamen Hydraulikspeicher (6) verbunden sind. Jedes Dämpfungsventil (4) weist ein vollständig mit Dämpfungsmedium (DM) gefülltes Ventilgehäuse (30) mit einem mit der Dämpfereinheit (2) verbundenen Eingangsanschluss (32), einem mit dem Hydraulikspeicher (6) verbundenen Ausgangsanschluss (34) sowie mit einer innerhalb des Ventilgehäuses (30) zwischen dem Eingangsanschluss (32) und dem Ausgangsanschluss (34) angeordneten Drosselventilanordnung (36) auf. Zwischen der in der Nähe des Eingangsanschlusses (32) angeordneten Drosselventilanordnung (36) und dem Ausgangsanschluss (34) ist ein Aufnahmeraum (42) für ein bestimmtes Volumen des Dämpfungsmediums (DM) gebildet.

## Beschreibung

Die vorliegende Erfindung betrifft ein Fahrzeug-Dämpfungssystem gemäß dem Oberbegriff des unabhängigen Anspruchs 1.

Ein derartiges Dämpfungssystem ist aus dem Dokument DE 91 03 359 U1, insbesondere Figur 4, bekannt.

In aller Regel ist in einem Fahrzeug für jedes Rad eine Dämpfereinheit vorhanden. So beschreibt beispielsweise das Dokument EP 0 425 885 B1 ein hydropneumatisches Federungssystem, wobei eine Kolbenzylindereinheit als Federbein zwischen einer gefederten Masse (Fahrzeugrahmen) und einer ungefederten Masse (Fahrzeugrad) angeordnet ist. Das Federbein ist hydraulisch mit einem hydropneumatischen Federspeicher verbunden, so dass beim Einfedern ein bestimmtes Volumen eines Hydraulikmediums gegen ein kompressibes Federmedium (Druckgas) im Federspeicher verdrängt wird. Das Druckgas wird dadurch komprimiert, und der Gasdruck bewirkt als pneumatische Feder über das dem Federmedium zugeordnete Hydraulikmedium eine Tragkraft im Federbein. Dieses bekannte Federungssystem hat sich in der Praxis recht gut bewährt, und zwar insbesondere in Ausführungen, wobei das Federbein mit zwei Federspeichern so zusammenwirkt, dass ein Kolben des Federbeins beidseitig mit je einem Federdruck beaufschlagt wird. Die Tragkraft resultiert folglich aus der Differenz von zwei gegensinnig auf den Kolben wirkenden Kräften. Allerdings wird dabei zum Dämpfen der Federungsbewegungen das gegen das pneumatische Druckmedium wirkende Hydraulikmedium über ein Dämpfungsventil geführt. Durch die Dämpfung (Drosselung) wird das dem Federmedium zugeordnete Hydraulikmedium aber rasch und zum Teil stark erwärmt. Diese Erwärmung wirkt sich auch auf das Druckgas aus, so dass dessen Druck und damit auch die Tragfederkraft ansteigen. Daraus resultieren je nach Fahrsituation recht ungünstige, variierende Federungs- und Dämpfungseigenschaften.

Die WO 03/106202 A1 beschreibt eine Federungseinrichtung, wobei in einigen Ausführungen eine Dämpfungseinrichtung einen separaten, von dem eigentlichen Federzylinder und dem Federmedium unabhängigen Kreislauf eines hydraulischen Dämpfungsmediums aufweist. Dazu ist mindestens ein separater Dämpfungszylinder mit einem in einem Zylinder relativbeweglich geführten Dämpferkolben sowie mindestens ein hydraulisch mit dem Dämpferzylinder verbundenes Dämpfungsventil erforderlich. Der Kolben des Federzylinders wird über eine von einem Zahnradgetriebe gebildete Antriebseinrichtung angetrieben, die die Schwenkbewegungen eines Rad-Schwingentragarms in lineare Relativbewegungen zwischen Zylinder und Kolben des Federzylinders umsetzt. Dabei soll die Dämpfungseinrichtung mit der gleichen Antriebseinrichtung wie auch der Federzylinder zusammenwirken, wobei aber die Medien, d.h. Federmedium und Dämpfungsmedium, vollständig voneinander getrennt sind. Hintergrund ist, dass dadurch nahezu keine thermische Abhängigkeit besteht, so dass dämpfungsbedingte Erwärmungen des Dämpfungsmediums insoweit unkritisch sind, als davon die Temperatur des Federmediums und somit auch der Druck und die druckabhängige Tragfederkraft praktisch unbeeinflusst bleiben. Diese bekannte Federungs- und Dämpfungseinrichtung hat allerdings einen relativ aufwändigen Aufbau, was sich auch durch ein relativ großes Einbauvolumen und Gewicht bemerkbar macht.

Das Dokument EP 1 584 502 A1 beschreibt eine weitere Federungs- und Dämpfungseinrichtung mit einem recht einfachen Teleskop-Federzylinder, dessen in einem Zylinder beweglich geführter Kolben zur Erzeugung einer lasttragenden Tragfederkraft unmittelbar oder über ein Hydraulikmedium mittelbar gegen ein elastisch kompressibles Federmedium wirkt. Hierbei ist zum Dämpfen ebenfalls ein separater, von dem Federmedium unabhängiger Kreislauf eines hydraulischen Dämpfungsmediums vorgesehen. Dazu trennt der Kolben innerhalb des Zylinders zwei Arbeitsräume voneinander, wobei der erste Arbeitsraum dem Federmedium und der zweite Arbeitsraum dem Dämpfungsmedium zugeordnet sind. Der mit dem Dämpfungsmedium gefüllte zweite Arbeitsraum ist über eine Dämpfungsventilanordnung mit einem Hydraulikbehälter verbunden. Dieser Hydraulikbehälter wird so angeordnet, dass das Dämpfungsmedium schwerkraftbedingt sich in einem unteren Bereich befindet. Oberhalb des Dämpfungsmediums kann Luft mit Atmosphärendruck angeordnet sein. Es kann aber auch vorgesehen sein, diesen Raum oberhalb des Dämpfungsmediums unter einen bestimmten Vorspanndruck zu setzen, um beim Einfedern den Fluss in den zweiten Arbeitsraum hinein zu unterstützen (Beschleunigung der Rückströmung). Dieses bekannte System hat sich gut bewährt, weil es bei konstruktiv einfacher und kompakter Bauweise eine sehr weitreichende thermische Entkoppelung zwischen dem hydraulischen Dämpfungsmedium und dem Federmedium gewährleistet. Da allerdings die beiden Medien nur über den Kolben des Federzylinders voneinander getrennt sind, kann es vor allem bei sehr starker Erwärmung des Dämpfungsmediums doch zu einem geringfügigen Wärmeübergang zum Federmedium kommen.

Der vorliegenden Erfindung liegt die Aufgabe zu Grunde, ein Dämpfungssystem der eingangs beschriebenen Art zu schaffen, mit dem bei weiterhin einfacher und kompakter Bauweise der Komponenten eine weitere Verbesserung der Gebrauchseigenschaften erreicht werden kann.

Erfindungsgemäß wird dies durch ein Dämpfungssystem mit den Merkmalen des unabhängigen Anspruchs 1 erreicht. Weitere vorteilhafte Ausgestaltungen der Erfindung sind in den abhängigen Ansprüchen sowie in der folgenden Beschreibung enthalten.

Der Erfindung liegt die Erkenntnis zugrunde, dass in einem Fahrzeug mit mehreren Dämpfereinheiten nicht alle Dämpfungsventile stets gleich hoch beansprucht werden, so dass auch die Erwärmung des Dämpfungsmediums nicht gleichmäßig hoch ist. Durch die Verbindung der Dämpfungsventile mit dem gemeinsamen Hydraulikspeicher kann sich das Dämpfungsmedium vorteilhafterweise zwischen den einzelnen Dämpfereinheiten austauschen, so dass durch Temperaturausgleich insgesamt eine vorteilhafte Reduzierung der Temperatur des Dämpfungsmediums erreicht wird. Folglich wird das Dämpfungsmedium ständig zwischen den einzelnen Dämpfereinheiten ausgetauscht (gemischt), wobei auch jedes separate Dämpfungsventil Wärme aus dem sich in dem Aufnahmeraum befindenden Volumen des Dämpfungsmediums über das Ventilgehäuse an die Umgebung abgibt, was insgesamt eine effektive Kühlwirkung verursacht.

Das erfindungsgemäße Dämpfungssystem kann deshalb bevorzugt in Kombination mit hydropneumatischen Federzylindern eingesetzt werden, wobei jede Dämpfereinheit einen Teleskop-Federzylinder aufweist, der aus einem in einem Zylinder relativbeweglich geführten Kolben besteht, der zur Erzeugung einer lasttragenden Tragfederkraft gegen ein elastisch kompressibles Federmedium wirkt. Hierbei kann durch die erfindungsgemäße Kühlwirkung der Federzylinder höher beansprucht werden, da dieser ja insgesamt weniger erwärmt wird. Durch die höhere zulässige Beanspruchung des Federungssystems kann vor allem auch bei Geländefahrzeugen die Fahrleistung erheblich gesteigert werden.

Anhand eines in der Zeichnung veranschaulichten, bevorzugten Ausführungsbeispiels soll die Erfindung genauer erläutert werden. Dabei zeigen:
- Fig. 1: ein Federungssystem für ein Fahrzeug mit beispielhaft drei Federzylindern und mit einem erfindungsgemäßen Dämpfungssystem, wobei alle Komponenten im Längsschnitt dargestellt sind, und
- Fig. 2: eine vergrößerte Teilansicht aus Fig. 1 eines der Federzylinder mit zugehöriger Dämpfereinheit.

In den beiden Figuren der Zeichnung sind gleiche Teile stets mit den gleichen Bezugszeichen versehen.

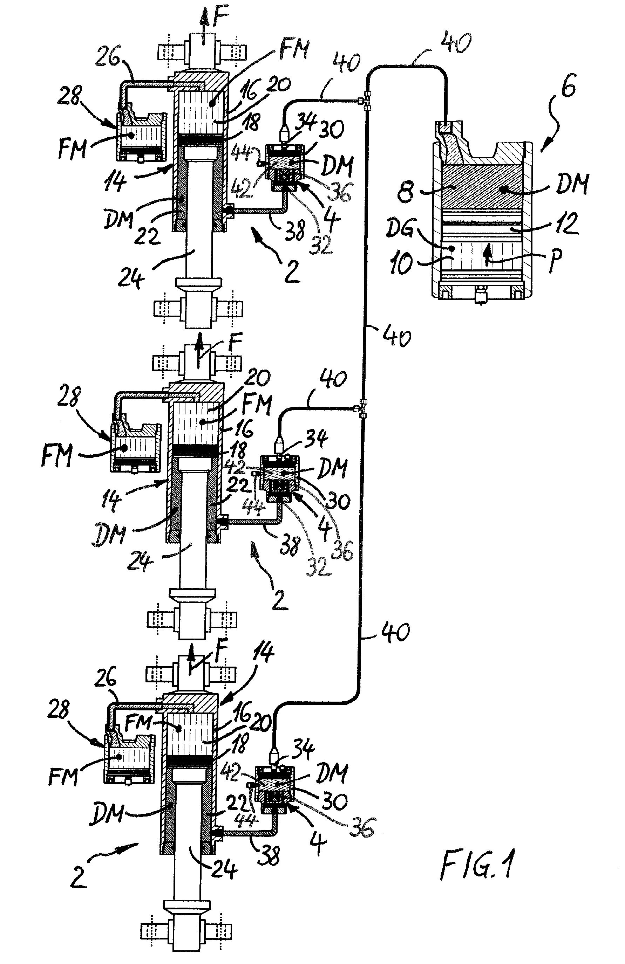

Wie sich zunächst aus Fig. 1 ergibt, besteht ein erfindungsgemäßes Dämpfungssystem aus mindestens zwei Dämpfereinheiten 2 zum Dämpfen von Rad-Federungsbewegungen innerhalb eines Fahrzeuges. In der Regel ist in einem Radfahrzeug jedes Rad mit einer eigenen Dämpfereinheit 2 ausgestattet, so dass ein Vierrad-Fahrzeug auch vier Dämpfereinheiten 2 aufweist, auch wenn in Fig. 1 beispielhaft nur drei Dämpfereinheiten 2 dargestellt sind. Jede Dämpfereinheit 2 weist ein hydraulisches Dämpfungsventil 4 zum Drosseln von - jeweils durch Federungsbewegungen verursachten - Strömungen eines hydraulischen Dämpfungsmediums DM auf.

Dabei sind mindestens zwei, vorzugsweise aber alle in dem Dämpfungssystem vorhandenen Dämpfungsventile 4 hydraulisch mit einem gemeinsamen Hydraulikspeicher 6 verbunden. Dieser Hydraulikspeicher 6 weist dazu einen Speicherraum 8 für bei Dämpfung der Federungsbewegungen variierende Volumen-Anteile des Dämpfungsmediums DM auf. Vorzugsweise ist das in dem Speicherraum 8 jeweils befindliche Dämpfungsmedium DM mit einem Vorspanndruck p beaufschlagt. In bevorzugter Ausgestaltung weist dazu der Hydraulikspeicher 6 benachbart zu dem Speicherraum 8 einen Druckraum 10 auf, der ein das Dämpfungsmedium DM mit dem Vorspanndruck p beaufschlagendes Druckgas DG enthält. Der Vorspanndruck p des Druckgases DG kann in der Größenordnung von 2 bis 20 bar, insbesondere im Bereich von 3 bis 10 bar liegen. Dieser Vorspanndruck p unterstützt die jeweilige Rückströmung des Dämpfungsmediums DM aus dem Speicherraum 8 zurück über das jeweilige Dämpfungsventil 4. Es ist weiterhin vorteilhaft, wenn der Speicherraum 8 von dem Druckraum 10 über ein Trennelement mediendicht getrennt ist. Im dargestellten Beispiel gemäß Fig. 1 ist als Trennelement innerhalb des zylindrischen Hydraulikspeichers 6 ein frei beweglich (schwimmend) geführter Trennkolben 12 angeordnet. Durch das Trennelement kann der Hydraulikspeicher 6 vorteilhafterweise in beliebiger Raumorientierung angeordnet werden, beispielsweise auch - wie in Fig. 1 dargestellt - so, dass der Speicherraum 8 "oben" und der Druckraum 10 "unten" angeordnet sind.

An dieser Stelle sei bemerkt, dass der Hydraulikspeicher 6 ausschließlich als Reservoir für das zur Dämpfung hin und her strömende Dämpfungsmedium DM fungiert. Dies bedeutet, dass der Hydraulikspeicher 6 ausschließlich dem Dämpfungskreislauf zugeordnet ist und folglich keine Federwirkung zur Rad-Abstützung im Fahrzeug hat.

In weiterer vorteilhafter Ausgestaltung ist aber das Dämpfungssystem praktisch mit einem Federungssystem kombiniert. Dazu ist jede Dämpfereinheit 2 bevorzugt Teil eines Teleskop-Federzylinders 14, der insbesondere zur Anordnung als so genanntes Federbein zwischen einem Fahrzeugrad bzw. einer Radaufhängung und einem Fahrzeugrahmen (nicht dargestellt) vorgesehen ist. Jeder Federzylinder 14 besteht aus einem Zylinder 16 und einem darin linear relativbeweglich geführten Kolben 18, der zur Erzeugung einer lasttragenden Tragfederkraft F gegen ein elastisch kompressibles Federmedium FM wirkt. Bei jedem Federzylinder 14 trennt der Kolben 18 innerhalb des Zylinders 16 zwei Arbeitsräume 20 und 22 mediendicht voneinander; der erste Arbeitsraum 20 ist dem Federmedium FM zugeordnet, während der zweite Arbeitsraum 22 dem hydraulischen Dämpfungsmedium DM zugeordnet ist. Dadurch sind zwei voneinander unabhängige Kreisläufe des Federmediums FM für die Federung und des Dämpfungsmediums DM für die Dämpfung gebildet. Dadurch wird eine weitgehende thermische Unabhängigkeit zwischen den Medien DM und FM erreicht. Der Kolben 18 ist auf einer Kolbenseite mit einer Kolbenstange 24 verbunden, die umfangsgemäß abgedichtet aus dem Zylinder 16 nach außen geführt ist. Dadurch ist einer der zwei Arbeitsräume als ein die Kolbenstange 24 umschließender Ringraum ausgebildet.

In der dargestellten, bevorzugten Ausführung bildet der die Kolbenstange 24 umschließende Ringraum den dem Dämpfungsmedium DM zugeordneten zweiten Arbeitsraum 22, während ein gegenüberliegender Zylinderraum den dem Federmedium FM zugeordneten ersten Arbeitsraum 20 bildet.

Der erste Arbeitsraum 20 ist mit dem elastisch kompressiblen Federmedium FM gefüllt und insbesondere über eine Leitung 26 mit einem zusätzlichen, ebenfalls mit Federmedium FM gefüllten Federspeicher 28 verbunden. Das Federmedium FM steht unter einem entsprechend hoch ausgelegten Druck, um durch Beaufschlagung des Kolbens 18 die Tragfederkraft F zu erzeugen.

Alternativ zu dieser Ausführung ist es auch möglich, den ersten Arbeitsraum 20 mit einem Hydraulikmedium zu füllen und hydraulisch mit dem Federspeicher 28 zu verbinden, wobei der Federspeicher 28 dann als hydropneumatischer Speicher z. B. mit einem Trennkolben zwischen dem Hydraulikmedium und dem Federmedium auszubilden ist.

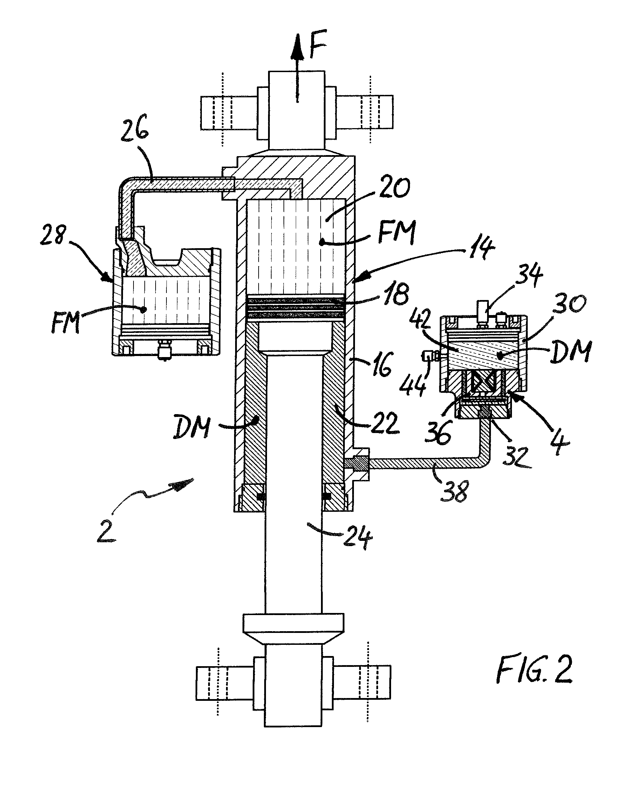

Der zweite Arbeitsraum 22 ist mit dem hydraulischen Dämpfungsmedium DM gefüllt und mit dem zugehörigen Dämpfungsventil 4 verbunden. Jedes Dämpfungsventil 4 ist als separates Bauteil mit einem eigenen, von dem Federzylinder 14 entfernt anzuordnenden Ventilgehäuse 30 ausgebildet. Hierzu wird insbesondere auf die vergrößerte Darstellung in Fig. 2 verwiesen. Demnach weist das Ventilgehäuse 30 einen mit dem Federzylinder 14 zu verbindenden Eingangsanschluss 32 und einen mit dem Hydraulikspeicher 6 zu verbindenden Ausgangsanschluss 34 auf. Innerhalb des Ventilgehäuses 30 ist zwischen dem Eingangsanschluss 32 und dem Ausgangsanschluss 34 eine Drosselventilanordnung 36 angeordnet. Der Eingangsanschluss 32 jedes Dämpfungsventils 4 ist mit dem zugehörigen Federzylinder 14, und zwar mit dessen zweitem Arbeitsraum 22, über eine Hydraulikleitung 38 verbunden. Die Ausgangsanschlüsse 34 aller Dämpfungsventile 4 sind mit dem gemeinsamen Hydraulikspeicher 6 über Hydraulikleitungen 40 verbunden (siehe Fig. 1). Zumindest die jeweilige zum gemeinsamen Hydraulikspeicher 6 führende Hydraulikleitung 40 ist an dem Dämpfungsventil 4 über eine Hydraulikkupplung (Steckverbindung) lösbar anschließbar. Jedes Dämpfungsventil 4 ist somit als hydraulisch geschlossenes, vollständig mit Dämpfungsmedium DM gefülltes System ausgebildet. Die Drosselventilanordnung 36 ist in der Nähe des Eingangsanschlusses 32 angeordnet, so dass zwischen der Drosselventilanordnung 36 und dem Ausgangsanschluss 34 ein Aufnahmeraum 42 für ein bestimmtes, aber relativ geringes Volumen des Dämpfungsmediums DM gebildet ist. Das Dämpfungsmedium DM kann über einen Füllanschluss 44 in den Aufnahmeraum 42 - und dadurch auch über die Drosselventilanordnung 36 und die Hydraulikleitung 38 in den zweiten Arbeitsraum 22 des Federzylinders 14 - eingefüllt werden.

Jede Drosselventilanordnung 36 besteht aus zwei Teilventilen, und zwar einem ersten Teilventil mit einem relativ höheren Drosselwiderstand für die Strömung des Dämpfungsmediums DM in den Hydraulikspeicher 6 und einem zweiten Teilventil mit einem relativ geringeren Drosselwiderstand für die umgekehrte Strömung aus dem Hydraulikspeicher 6 zurück in den Federzylinder 14. Hierdurch wird in an sich bekannter Weise erreicht, dass die Einfederung des Federzylinders 14 gering gedämpft wird, während die Ausfederung stärker gedämpft wird.

Als Druckgas DG für den Hydraulikspeicher 6 und/oder als Federmedium FM für den Federzylinder 14 und/oder optional für den zusätzlichen Federspeicher 28 wird insbesondere Stickstoff eingesetzt.

Durch die externe, von dem jeweiligen Federzylinder 14 getrennte Anordnung jedes Dämpfungsventils 4 und insbesondere durch die Verbindung der Dämpfungsventile 4 mit dem gemeinsamen Hydraulikspeicher 6 wird eine sehr effektive Kühlung des sich bei Drosselung erwärmenden Dämpfungsmediums DM erreicht. Dadurch wird eine Wärmeübertragung innerhalb des jeweiligen Federzylinders 14 auf das Federmedium FM außerordentlich gering gehalten, so dass das mit dem erfindungsgemäßen Dämpfungssystem ausgerüstete Federungssystem sehr konstante Federungs- und Dämpfungseigenschaften gewährleistet.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Dämpfungssystem für Fahrzeuge mit mindestens zwei Dämpfereinheiten (2) zum Dämpfen von Rad-Federungsbewegungen, wobei jede Dämpfereinheit (2) ein hydraulisches, als separates Bauteil ausgebildetes Dämpfungsventil (4) zum Drosseln von Strömungen eines hydraulischen Dämpfungsmediums (DM) aufweist, und wobei mindestens zwei Dämpfungsventile (4) hydraulisch mit einem gemeinsamen Hydraulikspeicher (6) verbunden sind,
**dadurch gekennzeichnet, dass** jedes Dämpfungsventil (4) ein vollständig mit Dämpfungsmedium (DM) gefülltes Ventilgehäuse (30) mit einem mit der Dämpfereinheit (2) verbundenen Eingangsanschluss (32), einem mit dem Hydraulikspeicher (6) verbundenen Ausgangsanschluss (34) sowie mit einer innerhalb des Ventilgehäuses (30) zwischen dem Eingangsanschluss (32) und dem Ausgangsanschluss (34) angeordneten Drosselventilanordnung (36) aufweist, wobei zwischen der in der Nähe des Eingangsanschlusses (32) angeordneten Drosselventilanordnung (36) und dem Ausgangsanschluss (34) ein Aufnahmeraum (42) für ein bestimmtes Volumen des Dämpfungsmediums (DM) gebildet ist.

2. Dämpfungssystem nach Anspruch 1,
**dadurch gekennzeichnet, dass** der gemeinsame Hydraulikspeicher (6) einen Speicherraum (8) für bei Dämpfung der Federungsbewegungen variierende Volumen-Anteile des Dämpfungsmediums (DM) aufweist, wobei das in dem Speicherraum (8) befindliche Dämpfungsmedium (DM) vorzugsweise mit einem Vorspanndruck (p) beaufschlagt ist.

3. Dämpfungssystem nach Anspruch 2,
**dadurch gekennzeichnet, dass** der Hydraulikspeicher (6) benachbart zu dem Speicherraum (8) einen Druckraum (10) mit einem das Dämpfungsmedium (DM) mit dem Vorspanndruck (p) beaufschlagenden Druckgas (DG) aufweist.

4. Dämpfungssystem nach Anspruch 2 oder 3,
**dadurch gekennzeichnet, dass** der Vorspanndruck (p) etwa im Bereich von 2 bis 20 bar, insbesondere im Bereich von 3 bis 10 bar, liegt.

5. Dämpfungssystem nach Anspruch 3 oder 4,
**dadurch gekennzeichnet, dass** der Speicherraum (8) von dem Druckraum (10) über ein Trennelement, insbesondere über einen frei beweglich geführten Trennkolben (12), mediendicht getrennt ist.

6. Dämpfungssystem nach einem der Ansprüche 1 bis 5,
**dadurch gekennzeichnet, dass** jede Dämpfereinheit (2) einen Federzylinder (14) - insbesondere zur Anordnung als Federbein zwischen einem Fahrzeugrad und einem Fahrzeugrahmen - aufweist, wobei der Federzylinder (14) einen in einem Zylinder (16) relativbeweglich geführten Kolben (18) aufweist, der zur Erzeugung einer lasttragenden Tragfederkraft (F) unmittelbar oder mittelbar über ein Hydraulikmedium gegen ein elastisch kompressibles Federmedium (FM) wirkt.

7. Dämpfungssystem nach Anspruch 6,
**dadurch gekennzeichnet, dass** der Kolben (18) innerhalb des Zylinders (16) zwei Arbeitsräume (20, 22) mediendicht voneinander trennt, wobei der erste Arbeitsraum (20) dem Federmedium (FM) und der zweite Arbeitsraum (22) dem hydraulischen Dämpfungsmedium (DM) zugeordnet sind.

8. Dämpfungssystem nach Anspruch 7,
**dadurch gekennzeichnet, dass** der Kolben (18) einseitig eine umfangsgemäß abgedichtet aus dem Zylinder (16) nach außen geführte Kolbenstange (24) aufweist, so dass einer der zwei Arbeitsräume (20, 22) als ein die Kolbenstange (24) umschließender Ringraum ausgebildet ist.

9. Dämpfungssystem nach Anspruch 8,
**dadurch gekennzeichnet, dass** der Ringraum den dem Dämpfungsmedium (DM) zugeordneten zweiten Arbeitsraum (22) bildet, während ein gegenüberliegender Zylinderraum den dem Federmedium (FM) zugeordneten ersten Arbeitsraum (20) bildet.

10. Dämpfungssystem nach einem der Ansprüche 7 bis 9,
**dadurch gekennzeichnet, dass** der erste Arbeitsraum (20) mit dem elastisch kompressiblen Federmedium (FM) gefüllt und insbesondere über eine Leitung (26) mit einem zusätzlichen, ebenfalls mit Federmedium (FM) gefüllten Federspeicher (28) verbunden ist.

11. Dämpfungssystem nach einem der Ansprüche 7 bis 10,
**dadurch gekennzeichnet, dass** der zweite Arbeitsraum (22) mit dem hydraulischen Dämpfungsmedium (DM) gefüllt und mit dem zugehörigen Dämpfungsventil (4) verbunden ist.

12. Dämpfungssystem nach einem der Ansprüche 1 bis 11,
**dadurch gekennzeichnet, dass** die Drosselventilanordnung (36) jedes Dämpfungsventils (4) aus zwei Teilventilen besteht, und zwar einem ersten Teilventil mit einem höheren Drosselwiderstand für die Strömung des Dämpfungsmediums (DM) in den Hydraulikspeicher (6) und einem zweiten Teilventil mit einem geringeren Drosselwiderstand für die umgekehrte Strömung aus dem Hydraulikspeicher (6).

13. Dämpfungssystem nach einem der Ansprüche 3 bis 12,
**dadurch gekennzeichnet, dass** das Druckgas (DG) innerhalb des Hydraulikspeichers (6) Stickstoff ist.

14. Dämpfungssystem nach einem der Ansprüche 6 bis 13,
**dadurch gekennzeichnet, dass** das Federmedium (FM) ein Druckgas, wie insbesondere Stickstoff ist.

15. Dämpfungssystem nach einem der Ansprüche 1 bis 14,
**dadurch gekennzeichnet, dass** zumindest der Ausgangsanschluss (34) jedes Dämpfungsventils (4) als Hydraulik-Steckverbindung zum lösbaren Anschluss einer Hydraulikleitung (40) ausgebildet ist.

16. Dämpfungssystem nach einem der Ansprüche 1 bis 15,
**dadurch gekennzeichnet, dass** jedes Dämpfungsventil (4) einen Füllanschluss (44) aufweist, über den das Dämpfungsmedium (DM) in den Aufnahmeraum (42) - und dadurch auch über die Drosselventilanordnung (36) in die Dämpfereinheit (2) - einfüllbar ist.
